# EUROPÄISCHE PATENTANMELDUNG

(11) **EP 0 947 129 A1**
(43) Veröffentlichungstag der Anmeldung: **06.10.1999**
(21) Anmeldenummer: 99106093.0
(22) Anmeldetag: 26.03.1999
(51) Int. Cl.: A01D 78/10

(54) **Landmaschine mit grosser Arbeitsbreite**

(30) Priorität: 02.04.1998 DE 29806043 U
(71) Anmelder: Fella-Werke GmbH, D-90537 Feucht (DE)
(72) Erfinder: Kohl, Bernard, 90537 Feucht (DE); Pürrer, Josef, 90537 Feucht (DE)
(74) Vertreter: Matschkur, Lindner Blaumeier Patent- und Rechtsanwälte

(57) **Zusammenfassung**

Landmaschine mit großer Arbeitsbreite, insbesondere Heumaschine mit mehreren Arbeitskreiseln, bei welcher mit Lauf- und Stützrädern versehene Rahmenseitenteile zur Verringerung der Arbeitsbreite nach hinten eingeschwenkt werden können, wobei die Träger der Lauf- und Stützräder (2) über ein vom Fahrerseitz her betätigbares Stellglied, insbesondere einen Hydrozylinder (4), um eine im wesentlichen vertikale Achse von einer Betriebsstellung in eine andere Betriebsstellung verstellbar sind.

## Beschreibung

Die Erfindung bezieht sich auf eine Landmaschine mit großer Arbeitsbreite, insbesondere Heumaschine mit mehreren Arbeitskreisen, bei welcher mit Lauf- und Stützrädern versehene Rahmenseitenteile zur Verringerung der Arbeitsbreite nach hinten eingeschwenkt werden können.

An derartigen Landmaschinen, insbesonderen an Kreiselzettwendern oder Schwadmaschinen, werden zur Abstützung und Bodenführung der Arbeitsorgane Lauf- oder Stützräder verwendet, welche an um in vertikale Achsen schwenkbaren Radträgern befestigt sind. Den unterschiedlichen Betriebszuständen entsprechend werden die Radträger in bestimmten unterschiedlichen Winkelstellungen fixiert. Das Überführen der durch das Maschinengewicht belasteten Radträger von einer Position in die andere erfordert einen hohen Kraftaufwand. Es sind daher Lösungen, wie beispielsweise in DBGM 295 07 128 beschrieben, vorgeschlagen worden, durch welche die gewünschte Radträgerposition ohne Kraftaufwand vorgewählt werden kann. Durch entsprechende Fahrmanöver werden die Räder dann ohne Einsatz von Muskelkraft in die gewünschte Position gebracht, so daß die vorgewählte Arretierung einrasten kann. Nachteilig bei diesen Verfahren ist aber, daß de Schlepperfahrer zum Vorwählen der Arretierung absteigen und in den Gefahrenbereich der Maschine treten muß.

Der Erfindung liegt daher die Aufgabe zugrunde, eine Landmaschine der eingangs genannten Art so auszugestalten, daß das Umstellen der Lauf- und Stützräder von einer Betriebsstellung in eine andere zur Gänze vom Fahrersitz aus bewirkt werden kann.

Zur Lösung dieser Aufgabe ist erfindungsgemäß vorgesehen, daß die Träger der Lauf- und Stützräder über ein vom Fahrersitz her betätigbares Stellglied, insbesondere einen Hydrozylinder, um eine im wesentlichen vertikale Achse von einer Betriebsstellung in eine andere Betriebsstellung verstellbar sind, wobei bevorzugt die Verstellung durch das Stellglied gegen die Kraft einer Rückstellfeder erfolgt, die den Träger in seine eine Betriebsstellung vorspannt. Bei drucklosem Zylinder ist damit sichergestellt, daß der Träger nicht zwischen den Betriebsstellungen frei pendelt, sondern in einer Betriebsstellung federnd gehaltert ist.

Der Hydrozylinder kann zum Verschwenken in beide Richtungen als doppeltwirkender Hydrozylinder ausgebildet sein, so daß sowohl das Umstellen der Lauf- und Stützräder von der Arbeitsstellung in die im wesentlichen um 90° verschwenkte Position in der Transportstellung als auch umgekehrt vom Fahrersitz aus über den Hydrozylinder erfolgen kann.

Dabei hat es sich besonders vorteilhaft erwiesen, wenn der Hydrozylinder mit der Druckmittelleitung von zum Verschwenken der Rahmenseitenteile dienenden weiteren Hydrozylindern verbunden ist. Durch diese Wirkverbindung erfolgt automatisch beim Verschwenken der Rahmenseitenteile die zugehörige Verschwenkung der Träger der Lauf- und Stützräder von der einen Betriebsstellung in die andere Betriebsstellung.

Schließlich liegt es auch noch im Rahmen der Erfindung, verstellbare Endanschläge vorzusehen, so daß in den beiden Betriebsstellungen unterschiedliche, vorwählbare Winkelstellungen der Stütz- und Laufräder erreichbar sind.

Weitere Vorteile, Merkmale und Einzelheiten der Erfindung ergeben sich aus der nachfolgenden Beschreibung eines Ausführungsbeispiels sowie anhand der Zeichnung. Dabei zeigen:

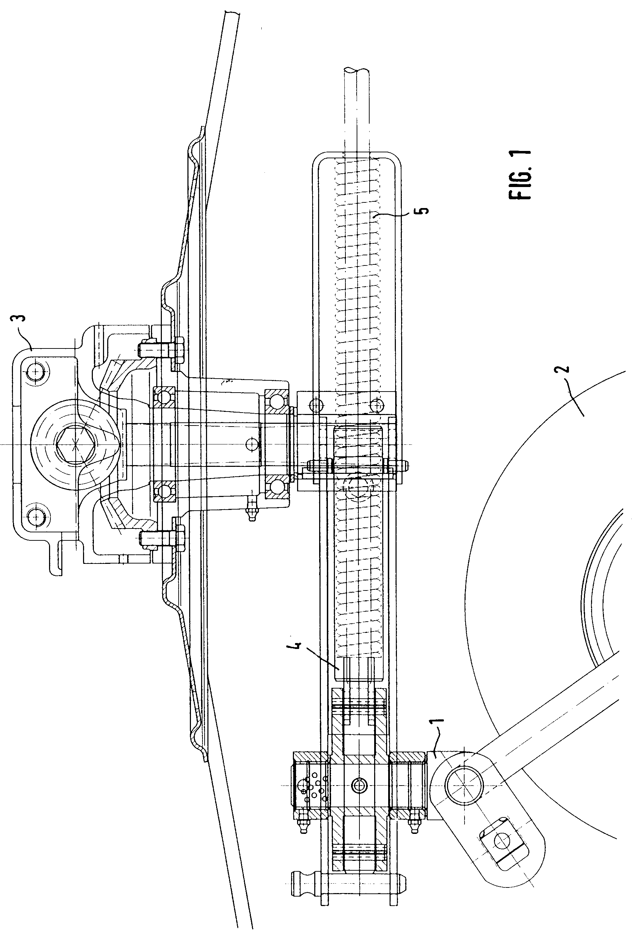

Fig. 1 einen Querschnitt durch ein Rahmenseitenteil im Bereich der Lagerung eines Lauf- und Stützrades,
Fig. 2 eine Aufsicht auf die Anordnung nach Fig. 1 in der ersten Betriebsstellung, und
Fig. 3 eine Aufsicht entsprechend Fig. 2 in der zweiten Betriebsstellung des Laufund Stützrades.

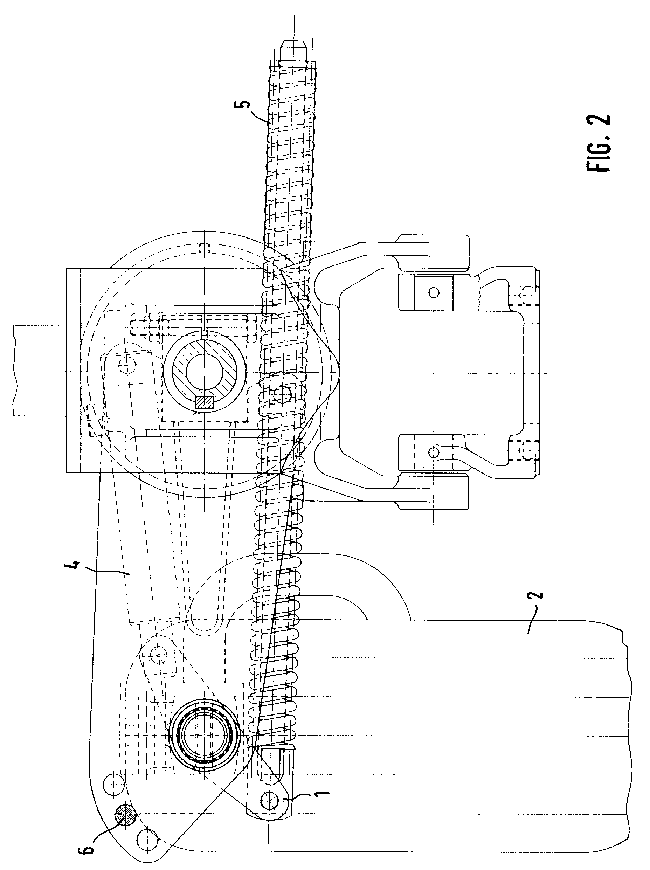

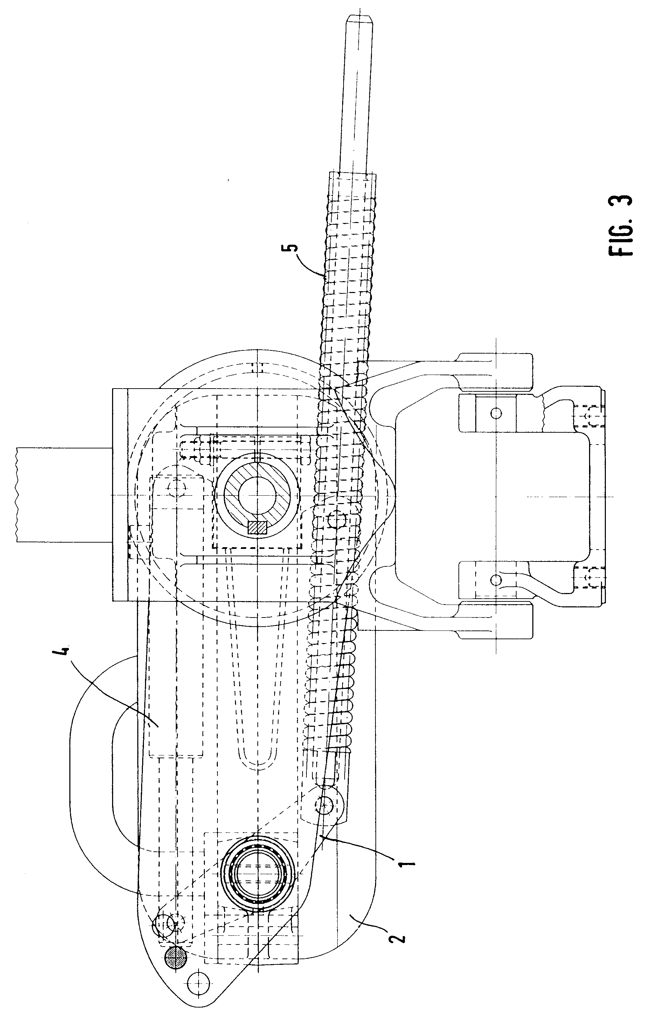

Jedem Radträger 1 für eines der Laufräder 2, das zum Abstützen eines Rahmenseitenteils 3 dient, ist ein hydraulischer Stellzylinder 4 zugeordnet, welcher entgegen der Kraft einer Rückstellfeder 5 die Radträger 1 schwenkt. Wenn das Hydrauliksystem drucklos ist, drückt die Rückstellfeder 5 den Radträger 1 in die Endstellung gemäß Fig. 2, die beispielsweise der Transportstellung entsprechen kann. Wird dagegen das im einzelnen nicht dargestellte Hydrauliksystem mit Druck beaufschlagt, so wird der Radträger 1 entgegen der Kraft der Feder 5 bis in die andere Betriebsstellung nach Fig. 3 gedreht und dort durch den weiterhin anstehenden Hydraulikdruck fixiert. Die Druckbeaufschlagung der Hydrozylinder 4 kann dabei vorteilhafterweise parallel zu evtl. vorhandenen Hydrozylindern zum Ausschwenken der Rahmenseitenteile 3 von der Transport- in die Arbeitsstellung an eine gemeinsame Druckleitung angeschlossen sein, so daß durch Betätigen nur eines Hydroventils die Rahmenseitenteile 3 und die Lauf- und Stützräder 2 gleichzeitig umgestellt werden.

Die Anschläge, welche die Endlage bestimmen, können vorteilhafterweise verstellbar sein. Das in den Figuren gezeigte Ausführungsbeispiel zeigt einen in mehreren Positionen absteckbaren Bolzen 6, welcher den Weg des Hydrozylinders 4 begrenzt. Damit kann z.B. die für das Feldrandräumen erforderliche Schrägstellung der Laufräder 2 eingestellt werden.

## Patentansprüche

1. Landmaschine mit großer Arbeitsbreite, insbesondere Heumaschine mit mehreren Arbeitskreiseln, bei welcher mit Lauf- und Stützrädern versehene Rahmenseitenteile zur Verringerung der Arbeitsbreite nach hinten eingeschwenkt werden können, dadurch gekennzeichnet, daß die Träger (1) der Lauf- und Stützräder (2) über ein vom Fahrerseitz her betätigbares Stellglied, insbesondere einen Hydrozylinder (4), um eine im wesentlichen vertikale Achse von einer Betriebsstellung in eine andere Betriebsstellung verstellbar sind.

2. Landmaschine nach Anspruch 1, dadurch gekennzeichnet, daß die Verstellung durch das Stellglied gegen die Kraft einer Rückstellfeder (5) erfolgt, die den Träger (1) in seine eine Betriebsstellung vorspannt.

3. Landmaschine nach Anspruch 1, dadurch gekennzeichnet, daß zum Verschwenken in beide Richtungen ein doppeltwirkender Hydrozylinder (4) vorgesehen ist.

4. Landmaschine nach einem der Ansprüche 1 bis 3, dadurch gekennzeichnet, daß der Hydrozylinder (4) mit der Druckmittelleitung von zum Verschwenken der Rahmenseitenteile dienenden weiteren Hydrozlindern verbunden ist.

5. Landmaschine nach einem der Ansprüche 1 bis 4, gekennzeichnet durch verstellbare Anschläge, so daß in zumindest einer der beiden Betriebsstellungen unterschiedliche vorwählbare Winkelstellungen der Stütz- und Laufräder (2) erreichbar sind.
